# EUROPEAN PATENT SPECIFICATION

(11) **EP 1 944 408 B1**
(45) Date of publication and mention of the grant of the patent: **27.04.2011**
(21) Application number: 07123856.2
(22) Date of filing: 20.12.2007
(51) Int. Cl.: D06M 16/00

(54) **Method for forming a fabric with insect, water- and oilrepellent characteristics and the fabric obtained.**
Verfahren zum Bilden eines Stoffes mit insekten-, wasser- und ölabweisenden Eigenschaften sowie daraus hergestellter Stoff.
Procédé de formation d'un tissu doté de propriétés répulsives contre les insectes, l'eau et l'huile et le tissu ainsi obtenu.

(30) Priority: 20.12.2006 BE 200600638
(43) Date of publication of application: 16.07.2008
(73) Proprietor: Utexbel NV, 9600 Ronse (BE)
(72) Inventor: Gribomont, Henri, 9600, RONSE (BE); Casteur, Jacques, 8580, AVELGEM (BE)
(74) Representative: Ostyn, Frans

(56) References cited:
- GB-A- 2 339 692
- US-A- 5 968 599

## Description

The present invention relates on the one hand to a method for forming a fabric with insect-, water- and oil-repellent characteristics, whereby a solution containing an insect-repellent product, a water-repellent product and an oil-repellent product is applied to the fabric. On the other hand, the present invention relates to a fabric formed by this method.

More specifically, the invention relates to the improvement of the retention, over successive washes, of both the insect-repellent product, in particular permethrin, and of the products that impart water- and oil-repellent characteristics to fabrics.

Permethrin is an insect-repellent agent that belongs to the group of pyrethroid substances. Since permethrin is rapidly broken down, synthetic permethrin is often used in applications. It is mainly used to repel or kill cold-blooded animals, such as for example mosquitoes.

Owing to its insect-repellent characteristics, permethrin is often applied to fabrics, knitwear, non-wovens, etc. However, due to the low permanence of permethrin, this insect-repellent agent has the disadvantage that it completely disappears from the fabric after a number of washes. For this reason, fabrics have to be treated with an insect-repellent product again and again after being washed. This procedure has the disadvantage that on the one hand it gives rise to an extra cost, and on the other hand it is bad for the environment.

To retain permethrin on fabrics longer, it is known from US Patent No. 5,252,387 to apply permethrin to fabrics in combination with amylopectin.

Another solution is described in US Patent No. 5,503,918, where permethrin is applied to the textile together with polyvinyl acetate. According to the patentee, this makes it possible to obtain better results in the field of permanence than with the amylopectin - permethrin combination, described in US Patent No. 5,252,387. European Patent EP 0,787,851 describes two embodiments for placing permethrin in fabrics. In the first embodiment, the textile is impregnated with a binder (acrylic binder), permethrin and possibly another cross-linking agent. In the second embodiment, only one side of the fabric surface is provided with permethrin and a binder.

In US Patent Application 2002 / 0039596 and US Patent No. 6,326,015, an insect-repellent product is described that can be applied to fabrics. The said product comprises an insect-repellent product (DEET) and an oil-attracting product, in particular an elastomer. The extent to which the insect-repellent product is released is regulated by varying the elastomer content.

All these solutions have the aim of obtaining an insect-repellent fabric (textile) with a certain permanence. None of the inventions mentioned above is aimed at obtaining an insect-, water- and oil-repellent result.

In International Patent Application WO 01/37662, the patentee describes the use of a water- and possibly oil-resistant film that forms a sheath around the fibres and which has a certain permanence of the insect-repellent product, due to the incorporation or inclusion of an insecticide. However, this invention does not offer a sufficient wash permanence for either the insect-repellent product or the products that provide the water- and oil-repellent characteristics.

PCT / US 94/14745 describes how an insect-repellent compound is obtained by mixing DEET with a silicone elastomer and by incorporating the mixture in a carbohydrate matrix by a special technique, after which the material is converted into a fine powder that can be combined with various products to obtain possibly also a water-repellent oil- and insect-repellent result. This technique has the disadvantages that: neither a high oil-repellence nor a water-repellence can be obtained, the creation of a carbohydrate matrix in which the insecticide is incorporated gives a two-phase system, and the carbohydrate matrix is sensitive to attack by bacteria that degrade it, as a result of which the insecticide is released in an uncontrolled manner. International Patent Application WO 98/18998 describes how an insect-repellent and water-repellent product is obtained by applying the silicone - permethrin combination in a solvent medium to a fabric.

WO 2006/024562 A1 describes the use of a zinc pyrithion in combination with various polymers, including fluorine derivatives. In this invention, only an acaricidal result is required, and only in the original (initial) state. This invention does not offer a solution for improving the wash permanence of the active constituent.

UK Patent No. 2,339,692 describes the use of a mixture of biocide, acaricide (which can be permethrin) and a fluoro-polymer. This invention gives very good initial result but similarly does not offer a solution for improving the wash resistance of the active constituent. The combination used will have a certain wash permanence, but this is not comparable with that obtained in the invention described below.

US Patent No. 5,968,599 describes a treating method for imparting water- and oil-repellent, soil- releasing and antibacterial properties to polyester/rayon mixed or blended fabric.

The aim of the present invention is to provide a method for forming a fabric with a combination of insect-, water- and oil-repellent characteristics, whereby these characteristics are retained over a large number of washes. The expression "number of washes", as used in this patent application, means at least 10, preferably 10 to 20, more preferably 20 to 60 and especially more than 60 washes.

The aim of the present invention is achieved by providing a method for forming a fabric with insect-, water- and oil-repellent characteristics, whereby a solution comprising an insect-repellent product, a water-repellent product and an oil-repellent product is applied to the fabric. The method according to the invention is characterized in that the following substances are added to the solution:
- an insect-repellent product
- a mixture of fluorocarbons as an oil-repellent product
- a modified melamine as a water-repellent product
- a polyvinyl acetate copolymer as a binder
- a carboxylic acid derivative as a catalyst
- a wetting agent, and
- a blocked isocyanate, in order to improve the retention of the fluorocarbon mixture and the insect-repellent product on the fabric over successive washes.

The unique combination of these products gives a fabric with a high water- and oil-repellence, coupled with insect-repellent characteristics. Owing to the combination of polyvinyl acetate copolymer/modified melamine/blocked isocyanate/carboxylic acid derivative, both the insect-repellent product and the products providing a good oil- and water-repellence remain on the resulting fabric for longer over successive washes than in the fabrics formed by the techniques known at present.

The water- and oil-repellent character of the fabric formed according to this method is, beside its insect-repellent character, a primary objective. It is not the case that the permanence of the insect-repellent character is only achieved by the water- and oil-repellent character. The unique combination according to the invention ensures that a much better permanence of the insect-repellent product is obtained in addition to the water- and oil-repellent characteristics. The method according to this invention gives a fabric with a good wash permanence at 60°C. Thus, there is still 70% of the active substance (permethrin) present after 10 washes at 60°C, and 60% of it is still present after 20 washes at 60°C.

The method is preferably used for non-woven products, knitwear and fabrics, such as for example cotton, polyester/cotton blend, linen, linen/cotton blend, polyamide, polyamide/cotton blend, polyester, polyester/viscose blend, meta-aramide, meta-aramide/cotton blend, modacryl, modacryl/cotton blend, viscose/cotton blend and combinations thereof. It should be mentioned here that the formulation can be simplified for products containing meta-aramide, where the composition need only comprise permethrin, a polyethylene emulsion, a fluorocarbon mixture and a blocked isocyanate in order to achieve the required wash permanence.

In a preferred method according to the invention, the amount of fluorocarbon mixture in the solution is at least 20 g/l. The amount of this fluorocarbon mixture in the solution is preferably between 20 and 250 g/l, and more especially the amount of the fluorocarbon mixture in the solution is between 100 and 180 g/l. The amount of fluorocarbon mixture in the solution is preferably about 120 g/l.

In a more preferred method according to the invention, the amount of polyvinyl acetate copolymer in the solution is at least 10 g/l. The amount of polyvinyl acetate copolymer in the solution is preferably between 10 and 100 g/l. The amount of polyvinyl acetate copolymer in the solution is preferably about 40 g/l. The addition of the polyvinyl acetate copolymer creates additional binding in the mixture, whereby a better wash resistance is obtained than in the known patent publications.

In a more preferred method according to the present invention, the amount of modified melamine in the solution is at least 30 g/l. In particular, the amount of modified melamine in the solution is between 30 and 350 g/l. More especially, the amount of modified melamine in the solution is about 250 g/l.

In a special method according to the invention, the amount of carboxylic acid derivative in the solution is at least 5 g/l. The amount of carboxylic acid derivative in the solution is preferably between 5 and 35 g/l. More especially, the amount of carboxylic acid derivative in the solution is about 25 g/l.

In a more special method according to the present invention, the amount of blocked isocyanate in the solution is at least 4.5 g/l. The amount of blocked isocyanate in the solution is preferably between 3 and 30 g/l. In particular, the amount of blocked isocyanate in the solution is about 18 g/l.

In a preferred method, the said insect-repellent product is permethrin. The amount of permethrin in the solution lies between 10 and 250 g/l, preferably between 20 and 150 g/l and more especially between 20 and 50 g/l. Other insect-repellent products that can be used in preferred embodiments are cyfluthrin, Bifenthrin, alpha-cypermethrin, deltamethrin, etofenprox and DEET.

To increase the tear-resistance of the fabric, the solution contains a polyethylene emulsion in a more preferred method according to the invention. The amount of polyethylene emulsion in the solution is preferably between 5 and 50 g/l. In particular, the amount of the polyethylene emulsion in the solution is between 10 and 30 g/l.

In the method according to the present invention, the said solution is preferably applied to the fabric by impregnation. Other known application techniques are also possible, such as for example spraying, coating and the use of a vibrating roller. After the application of the solution, the fabric is pressed between two rolls and then dried in a drying unit at a temperature of at least 110°C. After the fabric has been dried, it is polymerized at 160°C.

Another subject of this patent application is a fabric treated with a solution that contains an insect-repellent product, a water-repellent product and an oil-repellent product, where the said solution contains:
- an insect-repellent product
- a mixture of fluorocarbons as an oil-repellent product
- a modified melamine as a water-repellent product
- a polyvinyl acetate copolymer as a binder
- a carboxylic acid derivative as a catalyst
- a wetting agent, and
- a blocked isocyanate, in order to improve the retention of the fluorocarbon mixture and the insect-repellent product on the fabric over successive washes.

Such a fabric has the great advantage that both the insect-repellent product, preferably permethrin, and the products that ensure water- and oil-repellence, remain on the fabric over successive washes. Such a fabric has a long service life, with retention of its characteristics, especially its insect-, oil- and water-repellence.

The fabric is preferably formed by one of the methods described above.

The present invention also relates of course to the use of the solution described in the first claim for forming a wash-permanently insect-, water- and oil-repellent fabric. In order to elucidate the characteristics of the present invention further and to describe its additional advantages and features, a more detailed description of the method used and of a fabric formed by this method is given below. It will be obvious that nothing in the following description can be interpreted as a restriction of the protection requested for the present invention in the claims.

In order to make a fabric, knitwear or non-woven material wash-permanently insect-, water- and oil-repellent, the fabric is impregnated, for example by dip-coating in a solution comprising:
- a mixture of fluorocarbons as an oil-repellent product
- a modified melamine as a water-repellent product
- a polyvinyl acetate copolymer as a binder
- a carboxylic acid derivative as a catalyst
- a wetting agent, and
- a blocked isocyanate, in order to improve the retention of the fluorocarbon mixture and the insect-repellent product on the fabric over successive washes.

The solution can also contain an ethoxylated fatty alcohol and a polydimethylsiloxane in order to obtain a further improvement in the retention of the insect-repellent product on the fabric over successive washes.

The following worked example relates to the composition of a solution that is applied to a fabric in order to make it wash-permanently insect-, water- and oil-repellent. The usual amount of permethrin that is generally regarded as effective is 700 to 1600 mg/m². However, the concentration on the fabric depends on the concentration in the bath, on the uptake, and the weight of the fabric, but the polymerization temperature also has a great influence. It can therefore be stated that the concentration needed on a given fabric, the weight of the fabric, and the polymerization temperature are all decisive for the concentration of permethrin in the application bath.

### Example

- Wetting agent: 0.2 g/l
- Insect-repellent product (permethrin): 30 g/l
- Polyvinyl acetate copolymer (binder): 40 g/l
- Fluorocarbon mixture: 120 g/l
- Modified melamine: 250 g/l
- Carboxylic acid derivative: 25 g/l
- Blocked isocyanate: 18 g/l
- Anti-foaming agent: 0.2 g/l.

The products listed above are first dispersed in water the pH of which has been adjusted to a value between 5 and 7 and preferably to 6 by the addition of 80% acetic acid.

The resulting solution is then continuously introduced into an application bath that permits the impregnation of the fabric across its entire width. It should be mentioned here that the solution can also be applied in a discontinuous manner.

The uptake of the solution is 51% (depending on the nature of the fabric), that is to say, 1 kg of material absorbs 0.51 litres of water containing the following products on the basis ofthis example:
- wetting agent: 0.2 g/l x 0.511. = 0.096 g
- permethrin: 30 g/l x 0.511.= 15.3 g
- polyvinyl acetate copolymer: 60 g/l x 0.51 1. = 30.6 g
- Fluorocarbon mixture (compound): 120 g/l x 0.511. = 61.2 g
- Modified melamine: 250 g/l x 0.511. = 127.5 g
- Carboxylic acid derivative: 25 g/l x 0.511. = 12.7 g
- Blocked isocyanate: 18 g/l x 0.511. = 9.18 g
- Polydimethylsiloxane: 0.2 g/l x 0.511. = 0.096 g.

Therefore, with 30 g/l permethrin in the bath, we theoretically find 15.3 g of permethrin on 1 kg of fabric. If the weight of the fabric is 244 g/m², the amount of permethrin on the fabric is 15.3 g/kg x 0.244 kg/m² = 3.73 g/m². However, the permethrin used is a 50% product, so the amount of permethrin on the fabric is 3.73 g/m² x 50% = 1.865 g or 1865 mg/m².

The amount of permethrin recovered also depends on the polymerization temperature and time, as can be seen from the following example:

Fabric impregnated with 30 g/l of 50% permethrin and polymerized at various temperatures over various lengths of time.

| | |
|---|---|
| 1 minute at 140°C (initial state) | 1313 mg/m² |
| After 10 washes at 60°C | 1143 mg/m² |
| 10 seconds at 160°C (initial state) | 1196 mg/m² |
| After 10 washes at 60°C | 1007 mg/m² |
| 30 seconds at 160°C (initial state) | 1087 mg/m² |
| After 10 washes at 60°C | 937 mg/m² |

At least 80% of the initial value of permethrin was retained after 10 washes at 60°C. Other tests have shown that at least 60% of the initial values is retained after 30 washes.

The wash-resistance of the oil- and water-repellent character is indicated by the following tests: spray test (carried out according to ISO 4920), oil repellence test (carried out according to AATCC 118-2002) and the water column test (carried out according to ISO 811). The following table shows the results of these tests, carried out with a 225 g/cm² cotton-polyester fabric in the initial state (WO) and with the same fabric after 20 washes at 60°C (W20), followed by holding it at a temperature of 160°C for 30 seconds.

| | WO | W20 |
|---|---|---|
| Spray test | 5 | 2/3 |
| Oil repellence | 5 | 4/5 |
| Water column | 28 cm | 20 cm |

As can be seen from the above results, the fabric retains its water-repellent and oil-repellent characteristics after 20 washes.

After the fabric had been impregnated with the solution, it was pressed uniformly between two rolls with a specific hardness. The hardness of the rolls also determines the liquid uptake, because the greater the hardness of the rolls, the greater the degree of pressing, and the smaller the uptake.

The fabric is then dried in a drying unit at a temperature of at least 130°C. The drying unit consists of several units, each provided with its own means of heating and air circulation, together with control systems. The drying is followed by a condensation process, where the fabric is treated at 160°C, after which it is passed into an air cooling zone, followed by the use of contact cooling.

## Claims

1. Method for forming a fabric with insect-, water- and oil-repellent characteristics, whereby a solution comprising an insect-repellent product, a water-repellent product and an oil-repellent product is applied to the fabric, **characterized in that** the following substances are added to the solution:
- an insect-repellent product
- a mixture of fluorocarbons as an oil-repellent product
- a modified melamine as a water-repellent product
- a polyvinyl acetate copolymer as a binder
- a carboxylic acid derivative as a catalyst
- a wetting agent, and
- a blocked isocyanate, in order to improve the retention of the fluorocarbon mixture and the insect-repellent product on the fabric over successive washes.

2. Method according to Claim 1, **characterized in that** the amount of fluorocarbon mixture in the solution is at least 20 g/l.

3. Method according to Claim 1 or 2, **characterized in that** the amount of fluorocarbon mixture in the solution is between 20 and 250 g/l.

4. Method according to any one of the preceding claims, **characterized in that** the amount of polyvinyl acetate copolymer in the solution is at least 10 g/l.

5. Method according to any one of the preceding claims, **characterized in that** the amount of polyvinyl acetate copolymer in the solution is between 10 and 100 g/l.

6. Method according to any one of the preceding claims, **characterized in that** the amount of modified melamine in the solution is at least 30 g/l.

7. Method according to any one of the preceding claims, **characterized in that** the amount of modified melamine in the solution is between 30 and 350 g/l.

8. Method according to any one of the preceding claims, **characterized in that** the amount of carboxylic acid derivative in the solution is at least 5 g/l.

9. Method according to any one of the preceding claims, **characterized in that** the amount of carboxylic acid derivative in the solution is between 5 and 35 g/l.

10. Method according to any one of the preceding claims, **characterized in that** the amount of blocked isocyanate in the solution is at least 4.5 g/l.

11. Method according to any one of the preceding claims, **characterized in that** the amount of blocked isocyanate in the solution is between 3 and 30 g/l.

12. Method according to any one of the preceding claims, **characterized in that** the said insect-repellent product is permethrin.

13. Method according to claim 12, **characterized in that** the amount of permethrin in the solution is between 10 and 250 g/l.

14. Method according to any one of the preceding claims, **characterized in that** the said solution is applied to the fabric by impregnation.

15. Fabric treated with a solution comprising an insect-repellent, a water-repellent and an oil-repellent product, **characterized in that** the said solution contains:
- an insect-repellent product
- a mixture of fluorocarbons as an oil-repellent product
- a modified melamine as a water-repellent product
- a polyvinyl acetate copolymer as a binder
- a carboxylic acid derivative as a catalyst
- a wetting agent, and
- a blocked isocyanate, in order to improve the retention of the fluorocarbon mixture and the insect-repellent product on the fabric over successive washes.

16. Fabric according to Claim 15, **characterized in that** the said fabric is formed by a method according to any one of Claims 1-14.

## Patentansprüche

1. Verfahren zur Bildung eines Gewebes mit Insekten, Wasser und Öl abweisenden Eigenschaften, wobei eine Lösung, umfassend ein Insekten abweisendes Produkt, ein Wasser abweisendes Produkt und ein Öl abweisendes Produkt auf das Gewebe aufgebracht wird, **dadurch gekennzeichnet, dass** die folgenden Substanzen der Lösung hinzugefügt werden:
- ein Insekten abweisendes Produkt
- eine Mischung aus Fluorkohlenwasserstoffen als ein Öl abweisendes Produkt
- ein modifiziertes Melamin als ein Wasser abweisendes Produkt
- ein Polyvinylacetatcoplymer als ein Bindemittel
- ein Carboxylsäurederivat als ein Katalysator
- ein Benetzungsmittel, und
- ein blockiertes Isocyanat, um den Rückhalt der Fluorkohlenwasserstoffmischung und des Insekten abweisenden Produkts auf dem Gewebe über aufeinander folgende Waschvorgänge zu verbessern.

2. Verfahren nach Anspruch 1, **dadurch gekennzeichnet, dass** die Menge der Fluorkohlenwasserstoffmischung in der Lösung mindestens 20 g/l beträgt.

3. Verfahren nach Anspruch 1 oder 2, **dadurch gekennzeichnet, dass** die Menge von Fluorkohlenwasserstoffmischung in der Lösung zwischen 20 und 250 g/l liegt.

4. Verfahren nach einem der vorhergehenden Ansprüche, **dadurch gekennzeichnet, dass** die Menge von Polyvinylacetatcopolymer in der Lösung mindestens 10 g/l beträgt.

5. Verfahren nach einem der vorhergehenden Ansprüche, **dadurch gekennzeichnet, dass** die Menge von Polyvinylacetatcopolymer in der Lösung zwischen 10 und 100 g/l liegt.

6. Verfahren nach einem der vorhergehenden Ansprüche, **dadurch gekennzeichnet, dass** die Menge von modifiziertem Melamin in der Lösung mindestens 30 g/l beträgt.

7. Verfahren nach einem der vorhergehenden Ansprüche, **dadurch gekennzeichnet, dass** die Menge von modifiziertem Melamin in der Lösung zwischen 30 und 350 g/l liegt.

8. Verfahren nach einem der vorhergehenden Ansprüche, **dadurch gekennzeichnet, dass** die Menge von Carboxylsäurederivat in der Lösung mindestens 5 g/l beträgt.

9. Verfahren nach einem der vorhergehenden Ansprüche, **dadurch gekennzeichnet, dass** die Menge von Carboxylsäurederivat in der Lösung zwischen 5 und 35g/l liegt.

10. Verfahren nach einem der vorhergehenden Ansprüche, **dadurch gekennzeichnet, dass** die Menge von blockiertem Isocyanat in der Lösung mindestens 4,5 g/l beträgt.

11. Verfahren nach einem der vorhergehenden Ansprüche, **dadurch gekennzeichnet, dass** die Menge von blockiertem Isocyanat in der Lösung zwischen 3 und 30 g/l liegt.

12. Verfahren nach einem der vorhergehenden Ansprüche, **dadurch gekennzeichnet, dass** das Insekten abweisende Produkt Permethrin ist.

13. Verfahren nach Anspruch 12, **dadurch gekennzeichnet, dass** die Menge von Permethrin in der Lösung zwischen 10 und 250 g/l liegt.

14. Verfahren nach einem der vorhergehenden Ansprüche, **dadurch gekennzeichnet, dass** die Lösung durch Imprägnierung auf das Gewebe aufgebracht wird.

15. Gewebe, behandelt mit einer Lösung, umfassend ein Insekten abweisendes, ein Wasser abweisendes und ein Öl abweisendes Produkt, **dadurch gekennzeichnet, dass** die Lösung Folgendes enthält:
- ein Insekten abweisendes Produkt
- eine Mischung aus Fluorkohlenwasserstoffen als ein Öl abweisendes Produkt
- ein modifiziertes Melamin als ein Wasser abweisendes Produkt
- ein Polyvinylacetatcoplymer als ein Bindemittel
- ein Carboxylsäurederivat als ein Katalysator
- ein Benetzungsmittel, und
- ein blockiertes Isocyanat, um den Rückhalt der Fluorkohlenwasserstoffmischung und des Insekten abweisenden Produkts auf dem Gewebe über aufeinander folgende Waschvorgänge zu verbessern.

16. Gewebe nach Anspruch 15, **dadurch gekennzeichnet, dass** das Gewebe durch ein Verfahren nach einem der Ansprüche 1-14 gebildet ist.

## Revendications

1. Procédé de fabrication d'un tissu avec des caractéristiques de répulsion des insectes, hydrophobe et oléophobe, moyennant quoi, une solution, comprenant un produit répulsif des insectes, un produit hydrophobe et un produit oléophobe, est appliquée sur le tissu, procédé **caractérisé en ce que** les substances suivantes sont ajoutées dans la solution :
- un produit répulsif des insectes
- un mélange de fluorocarbures en tant que produit oléophobe
- une mélamine modifiée en tant que produit hydrophobe
- un copolymère d'acétate de polyvinyle en tant que liant
- un dérivé d'acide carboxylique en tant que catalyseur
- un agent mouillant, et
- un isocyanate bloqué, afin d'améliorer la rétention du mélange de fluorocarbures et du produit répulsif des insectes sur le tissu pendant des lavages répétés.

2. Procédé selon la revendication 1 **caractérisé en ce que** la quantité de mélange de fluorocarbures dans la solution est d'au moins 20 g/l.

3. Procédé selon les revendications 1 ou 2 **caractérisé en ce que** la quantité de mélange de fluorocarbures dans la solution est entre 20 et 250 g/l.

4. Procédé selon l'une quelconque des revendications précédentes **caractérisé en ce que** la quantité de copolymère d'acétate de polyvinyle dans la solution est d'au moins 10 g/l.

5. Procédé selon l'une quelconque des revendications précédentes **caractérisé en ce que** la quantité de copolymère d'acétate de polyvinyle dans la solution est entre 10 et 100 g/l.

6. Procédé selon l'une quelconque des revendications précédentes **caractérisé en ce que** la quantité de mélamine modifiée dans la solution est d'au moins 30 g/l.

7. Procédé selon l'une quelconque des revendications précédentes **caractérisé en ce que** la quantité de mélamine modifiée dans la solution est entre 30 et 350 g/l.

8. Procédé selon l'une quelconque des revendications précédentes **caractérisé en ce que** la quantité de dérivé d'acide carboxylique dans la solution est au moins de 5 g/l.

9. Procédé selon l'une quelconque des revendications précédentes **caractérisé en ce que** la quantité de dérivé d'acide carboxylique dans la solution est entre 5 et 35 g/l.

10. Procédé selon l'une quelconque des revendications précédentes **caractérisé en ce que** la quantité d'isocyanate bloqué dans la solution est au moins de 4,5 g/l.

11. Procédé selon l'une quelconque des revendications précédentes **caractérisé en ce que** la quantité d'isocyanate bloqué dans la solution est entre 3 et 30 g/l.

12. Procédé selon l'une quelconque des revendications précédentes **caractérisé en ce que** le produit répulsif des insectes est la perméthrine.

13. Procédé selon la revendication 12 **caractérisé en ce que** la quantité de perméthrine dans la solution est entre 10 et 250 g/l.

14. Procédé selon l'une quelconque des revendications précédentes **caractérisé en ce que** ladite solution est appliquée sur le tissu par imprégnation.

15. Tissu traité avec une solution comprenant un produit répulsif des insectes, un produit hydrophobe et un produit oléophobe, **caractérisé en ce que** ladite solution contient:
- un produit répulsif des insectes
- un mélange de fluorocarbures en tant que produit oléophobe
- une mélamine modifiée en tant que produit hydrophobe
- Un copolymère d'acétate de polyvinyle en tant que liant
- Un dérivé d'acide carboxylique en tant que catalyseur
- un agent mouillant, et
- un isocyanate bloqué afin d'améliorer la rétention du mélange de fluorocarbures et du produit répulsif des insectes sur le tissu pendant des lavages répétés.

16. Tissu selon la revendication 15 **caractérisé en ce que** ledit tissu est façonné par un procédé selon l'une quelconque des revendications de 1 à 14.
